# EUROPÄISCHE PATENTSCHRIFT

(11) **EP 4 161 685 B1**
(45) Veröffentlichungstag und Bekanntmachung des Hinweises auf die Patenterteilung: **18.02.2026**
(21) Anmeldenummer: 21731091.1
(22) Anmeldetag: 02.06.2021
(51) Int. Cl.: B01D 61/36, C02F 1/00

(54) **VERFAHREN UND VORRICHTUNG ZUM ENTSALZEN VON LÖSUNGEN**
METHOD AND DEVICE FOR DESALINATING SOLUTIONS
PROCÉDÉ ET DISPOSITIF DE DESSALEMENT DE SOLUTIONS

(30) Priorität: 03.06.2020 AT 504842020
(43) Veröffentlichungstag der Anmeldung: 12.04.2023
(73) Patentinhaber: VA TECH WABAG GmbH, 1220 Wien (AT)
(72) Erfinder: HELL, Florian, 1210 Wien (AT)
(74) Vertreter: KLIMENT & HENHAPEL
(86) Internationale Anmeldenummer: PCT/EP2021/064815
(87) Internationale Veröffentlichungsnummer: WO 2021/245143

(56) Entgegenhaltungen:
- EP-A1- 2 606 953
- US-A- 4 476 024
- US-A1- 2017 361 277
- ZHANG YONGGANG ET AL: "Review of thermal efficiency and heat recycling in membrane distillation processes", DESALINATION, ELSEVIER, AMSTERDAM, NL, vol. 367, 18 April 2015 (2015-04-18), pages 223 - 239, XP029216624, ISSN: 0011-9164, DOI: 10.1016/J.DESAL.2015.04.013

## Beschreibung

### GEBIET DER ERFINDUNG

Die gegenständliche Erfindung betrifft ein Verfahren zum Entsalzen einer Suspension sowie eine Vorrichtung zur Anwendung mit einem solchen Verfahren.

### STAND DER TECHNIK

Membrandestillationsvorrichtungen und -verfahren mit gekoppelter Kristallisation sind im Stand der Technik bereits hinlänglich bekannt.

Beim Membrandestillationsprozess wird Dampf, welcher durch das Erhitzen einer Flüssigkeit in einer Leitung entsteht, von der Flüssigkeit abgetrennt, in dem die Leitung als gaspermeable Membran ausgebildet ist, sodass zwar die gasförmigen Bestandteile, nicht jedoch die flüssigen die Membran passieren können.

Auch der Kristallisationsprozess ist im Stand der Technik bereits hinlänglich bekannt. Eine salzhaltige Lösung im Sättigungs- bzw. Übersättigungsbereich kristallisiert, d.h**.** die darin vorkommenden Salze finden sich nicht mehr nur gelöst in der Lösung, sondern bilden feste Kristalle. Erleichtert bzw. beschleunigt wird der Kristallisationsprozess durch die Zugabe von Kristallisationskeimen.

KR 2016/0149545 offenbart ein Verfahren und eine Vorrichtung, bei welchem bzw. bei welcher eine Lösung zunächst in einem Behälter erhitzt und in einem separaten Behälter dann der Lösungsmitteldampf mittels Membran entfernt wird. Im Anschluss wird die ankonzentrierte Lösung kristallisiert.

US 2017/0096355 A1 zeigt ebenfalls ein Verfahren und eine Vorrichtung, bei welchem bzw. bei welcher die Destillation bzw. Kristallisation in getrennten Behältern vorgenommen wird.

US 2017/036937 offenbart ein Verfahren bzw. eine Vorrichtung, bei welchem bzw. bei welcher zunächst durch Fällung Salze abgetrennt werden und in einem getrennten Behälter dann anschließend destilliert wird.

DE 10 2007 012 774 A1 offenbart ein Verfahren zum Auskristallisieren eines Salzes, wobei die Auskristallisation in einem Kreislauf umfassend ein Destillationsmodul erfolgt und Salzlösung entweder in den Reaktor oder in den Lösungskreislauf zugegeben wird. Die Vorrichtung umfasst dabei zwei separate Kreisläufe, einen zur Erwärmung der Lösung, um ein Destillat zu erzeugen, und einen zweiten mit Kühlmittel zur Erzeugung von Kondensat. Die DE 10 2007 012 774 AT zeigt keine Destillationseinheit, in welcher Heizabschnitt und Destillationsabschnitt vereint sind.

WO 00/72947 A1 offenbart ebenfalls ein Verfahren zum Auskristallisieren eines Salzes unter Verwendung eines Destillationsmoduls, welches Module umfasst, in denen Flüssigkeit im Gegenstrom durch Leitungen eingebracht wird und anschließend in Leitungen durch dasselbe Modul zurückgeführt wird. Die WO 00/72947 A1 offenbart damit eine Destillationseinheit mit ineinander verschränkten Leitungen des Heizabschnitts und des Destillationsabschnitts. Die WO 00/72947 A1 zeigt damit keinen Heizabschnitt, der vom Destillationsabschnitt getrennt ist, um zu verhindern, dass Heizmedium in den Destillationsabschnitt gelangen kann.

Die Veröffentlichung "Review of thermal efficiency and heat recycling in membrane distillation processes", ZHANG YONGGANG ET AL, DESALINATION, ELSEVIER, AMSTERDAM, NL, (20150418), vol. 367, pages 223 - 239, offenbart verschiedene Verfahren zur Membrandestillation, bei einem wird der entstehende Lösungsmitteldampf zum Erhitzen der Lösung verwendet.

Die US 4 476 024 A betrifft eine Destillation unter Verwendung einer Verbundmembran, durch die Verdampfung und Kondensation erfolgt.

Die EP 2 606 953 A1 betrifft ein Membrandestillationssystem, wo mehrere Destillatmodule in Reihe geschaltet sind und wobei jedes nachgeschaltete Modul mit einem geringeren Druck arbeitet als das vorherige Modul.

Die US 2017/361277 A1 zeigt ein System umfassend mehrere Membrandestillationsmodule, einen Wärmetauscher und einen Verdampfer, der benötigt wird, um Dampf für die Destillation zu erzeugen.

### AUFGABE DER ERFINDUNG

Die Aufgabe der Erfindung ist es eine verbesserte Vorrichtung und ein verbessertes Verfahren zur Entsalzung von Suspensionen zur Verfügung zu stellen, wobei die Destillation und die Kristallisation möglichst raum- und energiesparend durchgeführt werden.

### DARSTELLUNG DER ERFINDUNG

Die Aufgabe der Erfindung wird durch ein Verfahren zum Entsalzen einer Suspension gemäß Anspruch 1 gelöst.

Die gegenständliche Erfindung wird zum Entsalzen von Suspensionen verwendet. Als Suspensionen im Sinne der Erfindung werden salzhaltige Medien, insbesondere solche, die kurz vor der Sättigung sind, mit darin verteilten Feststoffpartikeln bezeichnet.

Gelöste Salze sind dabei insbesondere anorganische Salze wie z.B. NaCl, CaCO₃, CaSO₄, CaCl₂, Mg(OH)₂, MgSO₄ etc. oder organische Salze wie z.B. Calciumcitrat, Natriumacetat und andere.

Als im Medium suspendierte Feststoffpartikel kommen Partikel in Betracht, die geeignet sind als Kristallisationskeime zu dienen, und ein Ausfällen bzw. Kristallisieren der Salze nach Erreichen der Sättigung bzw. der Übersättigung zu bewirken.

Als Kristallisationskeime kommen dabei insbesondere ungelöste gleichartige Salzpartikel, ungelöste Fremdsalzpartikel oder auch Quarzsand in Betracht.

Vorzugsweise werden die Kristallisationskeime vor Beginn der Destillation zugegeben, aber es ist selbstverständlich nicht ausgeschlossen diese kontinuierlich zuzugeben bzw. nur bei Bedarf weitere Kristallisationskeime nach Beginn der Destillation zuzugeben, wenn durch Abbruch und Zerfall der entstehenden Kristalle nicht genügend Kristallisationskeime entstehen.

Als Medium für die Suspension kommen alle möglichen Flüssigkeiten in Betracht, die gelöste Salze enthalten können. Insbesondere kommt dabei Wasser in Betracht.

Vorteilhaft an der erfindungsgemäßen Vorrichtung und dem erfindungsgemäßen Verfahren ist, dass die Suspension zirkuliert wird, sodass es zu keiner Übersättigung kommt, sondern ab Erreichen der Sättigungskonzentration eines Salzes im gleichen Maße Salz an den Kristallisationskeimen kristallisiert wie Lösungsmitteldampf durch Verdampfung der Suspension entzogen wird. Die Kristallisation erfolgt damit bereits innerhalb der Destillationseinheit.

Hohle Destillatleitungen zur Durchführung der Destillation sind im Stand der Technik bereits bekannt. Insbesondere kommen als hohle Destillatleitungen solche aus Kunststoff in Betracht.

Hohl bedeutet, dass die Destillatleitungen im Inneren ein Volumen zur Aufnahme und Weiterleitung eines Flüssigkeits- bzw. Gasvolumens aufweisen.

Die erfindungsgemäße Destillationseinheit ist in einen Heizabschnitt und einen Destillationsabschnitt unterteilt, bildet aber sonst eine bauliche Einheit, um möglichst effizient eine Destillation und damit verbundene Ankonzentrierung der Suspension durchführen zu können. Unterteilt bedeutet, dass der Heizabschnitt und der Destillationsabschnitt voneinander getrennt sind, sodass kein Heizmedium zum Lösungsmitteldampf gelangt, und umgekehrt, aber dennoch bezüglich der Suspension flüssigkeitsleitend miteinander verbunden sind.

Der Heizabschnitt und der Destillationsabschnitt sind in der Destillationseinheit z.B. derartig zueinander angeordnet, dass in einer Flussrichtung der Suspension gesehen kein Abstand zwischen dem Heizabschnitt und dem Destillationsabschnitt vorhanden ist. Alternativ kann lediglich ein Abstand vorhanden sein, der kleiner ist als die Abmessung des Heizabschnitts und/oder des Destillationsabschnitts in Flussrichtung der Suspension gesehen. In diesem Abstand kann beispielsweise eine, vorzugsweise beheizbare, Flüssigkeitssammelkammer angeordnet sein, deren Querschnitt größer als ein Querschnitt einer Heizleitung oder einer Destillatleitung ist.

Dadurch ist das erfindungsgemäße Verfahren bzw. die erfindungsgemäße Vorrichtung sowohl raum- als auch energiesparend, weil keine langen Verbindungswege zwischen dem Heizabschnitt und dem Destillationsabschnitt vorgesehen sind. Die zusätzlichen Verbindungswege würden nämlich einerseits weitere Leitungen zur Verbindung erfordern, sodass mehr Raum benötigt würde, und andererseits müsste die Suspension in diesen weiteren Leitungen beheizt werden, um ein Abkühlen der erhitzten Suspension auf dem Weg zur Destillation zu verhindern, wodurch mehr Energie benötigt würde.

Der Heizabschnitt umfasst mindestens eine Heizleitung zum Leiten der Suspension, in der Regel eine Vielzahl von Heizleitungen. Der Destillationsabschnitt umfasst mindestens eine Destillatleitung, in der Regel aber eine Vielzahl von Destillatleitungen. Vorzugsweise umfasst der Heizabschnitt gleich viele Heizleitungen wie der Destillationsabschnitt Destillatleitungen umfasst, um ein besonders einfaches Überführen der erhitzten Suspension vom Heizabschnitt in den Destillationsabschnitt zu gewährleisten. Da die Flüssigkeit vom Heizabschnitt in den Destillationsabschnitt übergeführt wird, ist erfindungsgemäß vorgesehen, dass die beiden Abschnitte flüssigkeitsleitend miteinander verbunden sind.

Im Heizabschnitt der Destillationseinheit wird die sich in der Heizleitung befindliche Suspension erhitzt, während im Destillationsabschnitt destilliert bzw. abgetrennt wird. Abtrennen bedeutet, dass der durch das Erhitzen in der mindestens einen Heizleitung bzw. der Destillationsleitung entstehende Lösungsmitteldampf im Destillationsabschnitt durch eine gaspermeable Membran austreten kann, nicht jedoch die sich dort befindliche Flüssigkeit. Die dort verbleibende Flüssigkeit wird damit ankonzentriert.

Der erfindungsgemäße Heizabschnitt dient dazu, die sich in der mindestens einen Heizleitung befindliche Suspension zu erhitzen. Die Suspension wird hierbei auf 40°C bis 200°C, vorzugsweise 40°C bis 100°C, besonders bevorzugt etwa 70°C erhitzt.

Die Destillationseinheit umfasst weiter mindestens eine Dampfableitung, mit der der Lösungsmitteldampf aus dem Destillationsabschnitt abgeleitet werden kann.

Als erfindungsgemäße Heizleitung kommt prinzipiell jede Leitung in Betracht, die flüssigkeits- und gasundurchlässig ist. Insbesondere werden hierbei Leitungen aus Metall oder Kunststoff bevorzugt.

Die erfindungsgemäße mindestens eine Destillatleitung ist als gaspermeable Membran ausgebildet. Als gaspermeable Membran kommen hierbei insbesondere Membranen aus einem gaspermeablen Kunststoff oder aus Keramik in Betracht.

Um die Eigenschaft der Gaspermeabilität aufweisen zu können, muss die Membran Poren aufweisen. Vorzugsweise handelt es sich hierbei um Membranen mit einer Porengröße zwischen 0,1 µm und 0,5 µm, insbesondere etwa 0,2 µm.

Gemäß der Erfindung sind sowohl die zumindest eine Heizleitung als auch die zumindest eine Destillatleitung gerade ausgebildet. Dies bedeutet, dass weder die Heizleitung noch die Destillatleitung einen oder mehrere Bögen aufweisen, mit dem eine Umlenkung der Flussrichtung der Suspension erfolgen würde. Die mindestens eine Heizleitung und die mindestens eine Destillatleitung sind dabei in der gleichen Richtung angeordnet und verlaufen somit geradlinig durch den Heizabschnitt bzw. den Destillationsabschnitt, wodurch die Suspension geradlinig durch die Destillationseinheit fließt.

Erfindungsgemäß ist vorgesehen, dass die Destillationseinheit eine Ummantelung aufweist, die die mindestens eine Heizleitung und die mindestens eine Destillatleitung umgibt. Die Ummantelung der mindestens einen Heizleitung und der mindestens einen Destillatleitung ist so ausgebildet, dass sich zwischen der Ummantelung und der Heizleitung bzw. der Destillatleitung noch ein Volumen befindet. Das Volumen des Heizabschnitts ist jedoch jedenfalls vom Volumen des Destillationsabschnitts abgetrennt.

Als Ummantelung kommt jede im Stand der Technik geeignete Ummantelung in Betracht, vorzugsweise handelt es sich jedoch um eine Ummantelung aus Metall, Kunststoff.

Zwischen Ummantelung und der mindestens einen Heizleitung bzw. der mindestens einen Destillatleitung ist ein Zwischenraum umfassend ein Volumen vorhanden, in den ein Gas oder eine Flüssigkeit aufnehmbar ist.

Um besonders effizient den Lösungsmitteldampf aus dem Zwischenraum zwischen der Ummantelung und der Destillatleitung abführen zu können, ist vorzugsweise vorgesehen, dass die Vorrichtung weiters eine Vakuumpumpe umfasst. Aufgabe der Vakuumpumpe ist die Erzeugung und Aufrechterhaltung eines Unterdrucks und die Abfuhr nicht-kondensierbarer Gase, beispielsweise CO₂, O₂, N₂ usw. Durch den Unterdruck wird das Verdampfen des Lösungsmittels bei geringeren Temperaturen ermöglicht, was zu einer erhöhten Energieeffizienz des Verfahrens und der Vorrichtung führt.

Als Vakuumpumpe kommt jeder handelsübliche Vakuumerzeuger, insbesondere Ejektoren oder Wasserringpumpen, in Betracht, der zur Verwendung im Zusammenhang mit der erfindungsgemäßen Vorrichtung geeignet ist. Durch das Abführen des Lösungsmitteldampfs kann kontinuierlich Destillation und damit Ankonzentration der Suspension betrieben werden.

Um ein Heizmedium zwischen die Ummantelung und die mindestens eine Heizleitung zuführen zu können, ist erfindungsgemäß vorgesehen, dass der Heizabschnitt weiters mindestens eine Heizmediumzuleitung und mindestens eine Heizmediumableitung umfasst.

Als Heizmedium kommen insbesondere Flüssigkeiten oder Gase in Betracht, wobei besonders bevorzugt Wasser und Wasserdampf auf Grund ihrer guten Wärmeleitfähigkeit und der kostengünstigen Anschaffung als Heizmedium verwendet werden.

Durch das Zuführen von heißem Heizmedium wird die kalte Suspension durch Wärmeübertragung in der mindestens einen Heizleitung erwärmt. Erkaltetes Heizmedium wird über die Heizmediumableitung wieder abgeführt und durch heißes Heizmedium mittels Heizmediumzuleitung ersetzt.

Prinzipiell läuft ein erfindungsgemäßes Verfahren so ab, dass die Suspension vor Beginn des Destillations- bzw. Kristallisationsprozesses in einem Behälter hergestellt wird, indem zum Suspensionsmedium, vorzugsweise Wasser, das Salze enthält und welches entsalzt werden soll, Kristallisationskeime zugegeben werden. Es werden hierbei insbesondere Suspensionsmedien herangezogen, welche kurz vor der Sättigung sind. Vorzugsweise mittels Pumpe wird die zu entsalzende Suspension dann über eine Leitung in die Destillationseinheit gepumpt, wobei die Suspension zunächst in den Heizabschnitt, genauer in die mindestens eine Heizleitung, der Destillationseinheit gelangt.

Über die Heizmediumzuleitung wird das Heizmedium in den Zwischenraum zwischen die Ummantelung und die mindestens eine Heizleitung zugeführt, wodurch die kalte Suspension, die sich in der mindestens einen Heizleitung befindet, erwärmt wird. Durch die Wärmeabgabe des Heizmediums an die Suspension, erwärmt sich die Suspension, während das Heizmedium erkaltet. Erkaltetes Heizmedium wird sodann über die Heizmediumableitung abgeleitet und durch neues, heißes Heizmedium ersetzt, um eine kontinuierliche Erwärmung von Suspension zu ermöglichen. Die erwärmte Suspension wird anschließend in den Destillationsabschnitt übergeführt. Die erhitzte Suspension wird dabei von der mindestens einen Heizleitung in die mindestens eine Destillatleitung übergeführt, wobei die Heizleitung impermeabel für Gas und Flüssigkeiten ist, während die Destillatleitung gaspermeabel ist, sodass der entstehende Lösungsmitteldampf aus der mindestens einen Destillatleitung über Poren in den Zwischenraum zwischen Destillatleitung und Ummantelung permeieren kann. Durch diesen Vorgang wird die in der Destillatleitung befindliche restliche Suspension ankonzentriert, sodass sie den Sättigungsbereich bzw. den Übersättigungsbereich erreicht und unter anderem durch die Kristallisationskeime zu kristallisieren beginnt. Die Suspension wird dann aus der Destillationseinheit wieder herausgeleitet. Anschließend wird zumindest ein Teil der Suspension wieder in die Destillationseinheit zurückgeführt. Durch dieses Zurückführen der Suspension in die Destillationseinheit ist die Suspension ständig in Bewegung und nie im Stillstand, sodass die Destillation und die Kristallisation in einer Leitung bzw. einer Destillationseinheit durchgeführt werden können. Durch die ständige Bewegung der Suspension kommt es zusätzlich zu keinem Scaling an den Membranen der Destillationseinheit.In einer Ausführungsform der Erfindung ist vorgesehen, dass der Suspension Kristallisationskeime zugegeben werden, sodass eine Kristallisation von ankonzentrierten Salzen in der Destillatleitung erfolgt, um eine besonders effiziente Entsalzung der Suspension zu ermöglichen.

Die Kristallisationskeime können prinzipiell vor Beginn des Destillations- und Kristallisationsprozess zugegeben werden, oder kontinuierlich oder nach Bedarf.

In einer Ausführungsform der Erfindung ist vorgesehen, dass der Lösungsmitteldampf mittels einer Vakuumpumpe über die Dampfableitung aus dem Destillationsabschnitt abgeleitet wird, um ein besonders effizientes Ableiten des Lösungsmitteldampfs zu ermöglichen.

Als Vakuumpumpe kommt jeder handelsübliche Vakuumerzeuger, insbesondere Ejektoren oder Wasserringpumpen, in Betracht, der dazu geeignet ist im Zusammenhang mit der Erfindung verwendet zu werden.

Die Vakuumpumpe saugt den Lösungsmitteldampf aus dem Zwischenraum zwischen der Ummantelung und der mindestens einen Destillatleitung ab, wodurch neuer Lösungsmitteldampf aus der Destillatleitung permeieren kann.

In einer Ausführungsform der Erfindung ist vorgesehen, dass der Heizabschnitt mittels Wasser oder Gas als Heizmedium beheizt wird, um ein besonders effizientes und kostengünstiges Erhitzen der Suspension zu ermöglichen.

Um ein Abtrennen der entstandenen Salzkristalle aus der restlichen Suspension zu ermöglichen, ist erfindungsgemäß vorgesehen, dass entstandene Salzkristalle mittels Klassiereinrichtung abgetrennt werden, wobei die Klassiereinrichtung in Flussrichtung der Suspension gesehen hinter der Destillationseinheit angeordnet ist.

Nach Weiterleiten der Suspension aus der Destillationseinheit enthält die Suspension zumeist bereits eine Vielzahl an schweren bzw. großen Kristallen, weil die Kristallisation bereits im Membrandestillationsmodul, also in der Destillationseinheit, erfolgt. Um diese abzutrennen, ist eine Klassiereinrichtung vorgesehen, die Salzkristalle mit einem bestimmten Gewicht oder einer bestimmten Größe aus der Suspension abtrennt.

Um den Lösungsmitteldampf nach Ableiten aus dem Zwischenraum zwischen der Ummantelung und der mindestens einen Destillatleitung kondensieren zu können, ist in einer Ausführungsform der Erfindung vorgesehen, dass der Lösungsmitteldampf mittels eines Kondensators kondensiert wird, wobei der Kondensator in Flussrichtung des Lösungsmitteldampfs gesehen hinter der Destillationseinheit angeordnet ist. Als Kondensator kommt insbesondere ein Wärmetauscher in Betracht. Durch die Verwendung eines Wärmetauschers ist es möglich, reines Lösungsmittel zu gewinnen und einer einfachen Wiederverwendung oder Weiterverwendung zuzuführen.

Der Lösungsmitteldampf wird aus dem Zwischenraum abgeleitet und einem Kondensator zugeführt, wodurch der Lösungsmitteldampf wieder kondensiert, sodass das Lösungsmittel anderweitig weiterverwendet werden kann, oder dem Destillationskreislauf als Heizmittel wieder zugeführt werden kann.

Um eine besonders energieeffiziente Durchführung der Erfindung zu ermöglichen, ist in einer Ausbildungsform der Erfindung vorgesehen, dass mehrere Destillationseinheiten hintereinander angeordnet und miteinander verbunden werden und dass zumindest ein Teil des Lösungsmitteldampfs der vorherigen Destillationseinheit zum Beheizen der nachfolgenden Destillationseinheit verwendet wird.

Der Lösungsmitteldampf, der aus der mindestens einen Destillatleitung permeiert, wird in diesem Fall nicht abgeleitet oder einem Kondensator zugeführt, sondern wird zumindest teilweise der nachfolgenden Destillationsheit, genauer, dem Heizabschnitt der Destillationseinheit wieder als Heizmedium zugeführt. Der Lösungsmitteldampf wird hierbei über die Dampfableitung der vorherigen Destillationseinheit in die nachfolgende Destillationseinheit weitergeleitet, wobei die Dampfableitung der vorherigen Destillationseinheit damit als Heizmediumzuleitung der nachfolgenden Destillationseinheit dient. Das Verwenden des Lösungsmitteldampfes der vorherigen Destillationseinheit zum Erhitzen der nachfolgenden Destillationseinheit wird dadurch ermöglicht, dass der Druck und die Temperatur nach dem Passieren einer Destillationseinheit jeweils abnimmt, so dass der Druck und die Temperatur bei der vorherigen Destillationseinheit jeweils höher ist als bei der nachfolgenden Destillationseinheit.

Es ist bekannt, dass unterschiedliche Salze, welche in Salzgemischen vorliegen, bei unterschiedlichen Konzentrationen kristallisieren. In einer Ausführungsform der Erfindung ist daher vorgesehen, dass eine Salzkonzentration der Suspension bei einem Passieren mehrerer Destillationseinheiten durch das Entfernen des Lösungsmitteldampfes nach jeder Destillationseinheit weiter ansteigt, und zumindest nach zwei Destillationseinheiten unterschiedliche Salze abgetrennt werden. Es versteht sich von selbst, dass die Konzentration der zu entsalzenden Suspension nach Passieren der Destillationseinheit auf Grund des Ankonzentrierungsvorganges höher ist als vor Passieren der Destillationseinheit, sodass mit jeder passierten Destillationseinheit die Salzkonzentration natürlich weiter ansteigt. Durch die nach jeder passierten Destillationseinheit ansteigende Salzkonzentration wird eine separate Salzabtrennung der Salze ermöglicht, wobei zunächst die schwerlöslichen Salze wie CaCO₃ und CaSO₄ bei niedrigeren Konzentrationen kristallisieren und abgetrennt werden und bei höheren Konzentrationen die leichter löslichen Salze, etwa NaCl, ausfallen und abgetrennt werden. Die Abtrennung kann dann beispielsweise durch Klassiereinrichtungen erfolgen, die jeweils einer Destillationseinrichtung nachgeschaltet sind, sodass etwa nach jeder Destillationseinheit ein anderes Salz abgetrennt wird.

So können beispielsweise nach einer ersten Destillationseinheit schwerlösliche Salze wie CaCO₃ oder CaSO₄ abgetrennt werden, während nach der nachfolgenden Destillationseinheit leichtlösliche Salze wie NaCl abgetrennt werden. Selbstverständlich ist es auch möglich, weitere Destillationseinheiten hintereinander anzuordnen und damit eine noch spezifischere Auftrennung der Salze zu erreichen.

Alternativ kann vorgesehen sein, dass nicht ständig neue Suspension zur Destillationseinheit zugeführt wird, sondern zu Beginn des Destillationsprozesses nur einmal eine bestimmte Suspensionsmenge zugegeben wird und die Vorrichtung im sogenannten Batch-Betrieb betrieben wird. Dies bedeutet, dass die Suspension nach dem Verlassen der Destillationseinheit wieder vollständig in die Destillationseinheit zurückgeleitet wird. In einem derartigen Batch-Betrieb ist es möglich, eine Abtrennung von unterschiedlichen Salzen, welche im Salzgemisch der Suspension vorliegen, bei unterschiedlichen Konzentrationen zu kristallisieren. Dabei passiert die Suspension in einem ersten Durchgang die Destillationseinheit, wobei bei diesem Durchgang zunächst ein erstes Salz oder mehrere erste Salze abgetrennt werden können, die bereits bei diesem ersten Durchgang auskristallisieren. Durch das Entfernen des Lösungsmitteldampfes nach dem Passieren der Destillationseinheit steigt die Salzkonzentration nach dem ersten Durchgang durch die Destillationseinheit natürlich entsprechend an, sodass bei dem nachfolgenden Durchgang durch die Destillationseinheit ein vom ersten Salz bzw. von den ersten Salzen verschiedenes Salz bzw. verschiedene Salze abgetrennt werden können. Es versteht sich von selbst, dass die Konzentration der zu entsalzenden Suspension nach Passieren der Destillationseinheit auf Grund des Ankonzentrierungsvorganges höher ist als vor Passieren der Destillationseinheit, sodass mit jeder neuen Durchgang durch die Destillationseinheit die Salzkonzentration natürlich weiter ansteigt. Durch die mit jedem Durchgang durch die Destillationseinheit ansteigende Salzkonzentration wird eine separate Salzabtrennung der Salze ermöglicht, wobei zunächst wie bei einem Fraktionsbetrieb zunächst die schwerlöslichen Salze wie CaCO₃ und CaSO₄ bei niedrigeren Konzentrationen kristallisieren und abgetrennt werden und bei höheren Konzentrationen die leichter löslichen Salze, etwa NaCl, ausfallen und abgetrennt werden. Die Abtrennung kann dann nach jedem Durchgang durch die Destillationseinheit mittels derselben nachgeschalteten Klassiereinrichtung erfolgen, sodass nach jedem Durchgang durch die Destillationseinheit ein anderes Salz abgetrennt wird.

Das bedeutet, dass das Entsalzen bzw. Auskristallisieren der Salze einerseits im kontinuierlichen Betrieb einer einzelnen Destillationseinheit oder mehreren nacheinander geschalteten Destillationseinheiten erfindungsgemäß erfolgen kann, wobei hier jeweils zumindest in der einen bzw. ersten Destillationseinheit kontinuierlich zu entsalzende Suspension zugegeben wird. Andererseits kann das Entsalzen bzw. Auskristallisieren der Salze auch im Batchbetrieb, auch Chargen-Betrieb genannt, erfolgen. Dabei wird lediglich einmal zu Beginn des Entsalzungsprozesses in die eine bzw. die erste Destillationseinheit zu entsalzende Suspension zugegeben, die dann die Destillationseinheit(en) zumindest einmal, vorzugsweise mehrfach, durchläuft.

Die Aufgabe der Erfindung wird weiter von einer Vorrichtung gemäß Anspruch 10 zum Entsalzen einer Suspension zur Anwendung mit einem erfindungsgemäßen Verfahren gelöst.

Um ein besonders effizientes Überführen der Suspension vom Heizabschnitt in den Destillationsabschnitt zu ermöglichen, ist in einer Ausführungsform der Erfindung vorgesehen, dass die zumindest eine Heizleitung in die zumindest eine Destillatleitung übergeht. In der Regel wird jede der mehreren Heizleitungen in eine der mehreren Destillatleitungen übergehen.

Um eine besonders einfache Fertigung der Ummantelung zu ermöglichen, ist vorgesehen, dass die Heizleitung und die Destillatleitung von einer gemeinsamen Ummantelung umgeben sind. Auch bei einer gemeinsamen Ummantelung ist allerdings der Heizabschnitt vom Destillationsabschnitt getrennt, so dass kein Heizmedium in den Destillationsabschnitt gelangen kann. Es ist vorgesehen, dass die Ummantelung beispielsweise ein Zylinder sein kann, dessen Länge zumindest der Länge einer Destillatleitung plus der Länge einer Heizleitung entspricht. Selbstverständlich sind andere Formen der Ummantelung nicht ausgeschlossen, so kann es sich bei der Ummantelung natürlich auch um einen Quader oder dergleichen handeln.

In einer Ausführungsform der Erfindung ist vorgesehen, dass zwischen Heizabschnitt und dem Destillationsabschnitt weiters eine, vorzugsweise beheizbare, Flüssigkeitssammelkammer angeordnet ist, deren Querschnitt größer als ein Querschnitt einer Heizleitung oder einer Destillatleitung ist. Damit wird die Verwendung einer unterschiedlichen Anzahl von Heizleitungen und Destillatleitungen ermöglicht. Die mindestens eine Heizleitung endet in diesem Fall, in Flussrichtung der Suspension gesehen, beim Eintritt oder in der Flüssigkeitssammelkammer, die mindestens eine Destillatleitung beginnt im oder beim Austritt aus der Flüssigkeitssammelkammer und Heizleitung und Destillatleitung weisen in Flussrichtung der Suspension gesehen einen Abstand zueinander auf. Die Flüssigkeitssammelkammer ist vorzugsweise beheizbar, um zu verhindern, dass die zuvor im Heizabschnitt erhitzte Suspension wieder abkühlt und damit im Destillationsabschnitt nachfolgend keine Destillation durchgeführt werden kann. Da Heizabschnitt und Destillationsabschnitt eine gemeinsame Ummantelung aufweisen, hat die Flüssigkeitssammelkammer vorzugsweise einen Durchmesser, der nicht größer als jener der Ummantelung ist.

Um eine besonders große Destillationsoberfläche zu Verfügung zu haben, ist in einer Ausführungsform der Erfindung vorgesehen, dass die mindestens eine Destillatleitung einen Durchmesser zwischen 3 mm und 10 mm, vorzugsweise zwischen 4 mm und 8 mm, besonders bevorzugt etwa 5 mm Durchmesser aufweist. Bei Verwendung von Destillatleitungen mit einem Durchmesser in den genannten Bereichen wird erreicht, dass möglichst viel permeable Membranoberfläche zur Verfügung steht, durch welche der entstandene Lösungsmitteldampf in den Zwischenraum zwischen Ummantelung und Destillatleitung permeieren kann, wodurch eine besonders effektive Destillation erfolgt. Ein zu kleiner Leitungsdurchmesser würde zur Verstopfung durch die Kristallisationskeime bzw. die wachsenden Kristalle führen, während ein zu großer Durchmesser der Leitungen zu einer verminderten Membranoberfläche führen würde.

Um eine rasche Durchwärmung der Suspension zu ermöglichen, ist in einer Ausführungsform der Erfindung vorgesehen, dass die mindestens eine Heizleitung einen Durchmesser zwischen 3 mm und 10 mm, vorzugsweise zwischen 4 mm und 8 mm, besonders bevorzugt etwa 5 mm Durchmesser aufweist. Auch bei der mindestens einen Heizleitung würde ein zu kleiner Leitungsdurchmesser zur Verstopfung durch die Kristallisationskeime bzw. die wachsenden Kristalle führen, während ein zu großer Durchmesser der Leitungen zu einer verminderten Wärmetauscherfläche führen würde.

Um ein rasches Permeieren des Lösungsmitteldampfs durch die Membran zu ermöglichen, aber zu verhindern, dass Flüssigkeit bzw. unerwünschte Ionen die Membran passieren, ist erfindungsgemäß vorgesehen, dass die gaspermeable Membran der Destillatleitung eine Dicke von 0,3 mm bis 2 mm, vorzugsweise 0,7 mm bis 1,7 und besonders bevorzugt zwischen 1 mm bis 1,5 mm aufweist.

Um eine effiziente Permeation des Lösungsmittels durch die Membran zu ermöglichen, diese aber gleichzeitig unpassierbar für Flüssigkeiten zu machen, ist in einer Ausführungsform der Erfindung vorgesehen, dass die gaspermeable Membran der Destillatleitung aus einem gaspermeablen Kunststoff oder einer gaspermeablen Keramik gefertigt ist. Als gaspermeabler Kunststoff kommen dabei insbesondere Polytetrafluorethylen (PTFE), Polyvinylidenfluorid (PVDF) oder Polypropylen (PP) in Betracht.

Um zu verhindern, dass die Suspension in das Heizmedium gelangt bzw. das Heizmedium in die Suspension, ist in einer Ausführungsform der Erfindung vorgesehen, dass die mindestens eine Heizleitung aus flüssigkeits- und gasundurchlässigem Kunststoff oder Metall gefertigt ist.

In einer Ausführungsform der Erfindung ist vorgesehen, dass die Ummantelung aus Kunststoff gefertigt ist, um eine einfache Herstellung der Ummantelung zu gewährleisten. Insbesondere ist dadurch eine besonders einfache Herstellung einer gemeinsamen Ummantellung für die Destillat- und die Heizleitung möglich.

In einer Ausführungsform der Erfindung ist vorgesehen, dass die Vorrichtung weiters einen Kondensator umfasst, wobei der Kondensator in Flussrichtung des Lösungsmitteldampfs gesehen hinter der Destillationseinheit angeordnet ist, um den Lösungsmitteldampf zu kondensieren.

In einer Ausführungsform der Erfindung ist vorgesehen, dass die Vorrichtung weiters mindestens eine Klassierungseinrichtung zum Abtrennen der Suspensionskristalle umfasst, wobei die Klassiereinrichtung in Flussrichtung der Suspension gesehen hinter der Destillationseinheit angeordnet ist, um Kristalle, die eine bestimmte Größe oder ein bestimmtes Gewicht erreicht haben, abtrennen zu können. Durch das Ankonzentrieren der Suspension erreicht das Suspensionsmedium den Sättigungsbereich bzw. den Übersättigungsbereich. Durch die vorhandenen Kristallisationskeime erfolgt die Kristallisation der vorhandenen Salze, was zum Wachstum der Kristallisationskeime bzw. neuer Kristalle führt.

Um eine möglichst energieeffiziente Ausführung der Vorrichtung zu ermöglichen, ist in einer Ausführungsform der Erfindung vorgesehen, dass die Vorrichtung mehrere hintereinander angeordnete miteinander verbundene Destillationseinheiten umfasst, wobei die Dampfableitung der vorherigen Destillationseinheit die Heizmediumzuleitung der nachfolgenden Destillationseinheit bildet. Durch eine derartige Anordnung der Destillationseinheiten wird erreicht, dass der Lösungsmitteldampf der vorherigen Destillationseinheit als Heizmedium für die nachfolgende Destillationseinheit herangezogen werden kann und selbst kondensiert wird. Diese Anordnung ermöglicht weiters eine sehr effiziente Entsalzung von großen Mengen der Suspension. Durch das Verwenden des Lösungsmitteldampfs der vorherigen Destillationseinheit für die Erhitzung der Suspension in der nachfolgenden Destillationseinheit werden insbesondere die Energiekosten niedrig gehalten.

In einer Ausführungsform der Erfindung ist vorgesehen, dass bei mehreren hintereinander angeordneten, miteinander verbundenen Destillationseinheiten in Flussrichtung der Suspension gesehen hinter zumindest zwei Destillationseinheiten jeweils zumindest eine Klassiereinrichtung angeordnet ist, um unterschiedliche Salze separat abtrennen zu können. Eine derartige Anordnung ermöglicht ein besseres Abtrennen verschiedener sich in der Suspension befindlicher Salze, wodurch beispielsweise eine Weiterverwendung vereinfacht wird bzw. ein späteres Aufreinigen erleichtert wird.

In einer Ausführungsform ist eine Leitung vorgesehen, mit welcher zumindest ein Teil der Suspension nach Verlassen der Destillationseinheit wieder in die Destillationseinheit zurückleitbar ist. In diesem Fall umfasst die Vorrichtung zum Entsalzen einer Suspension vorzugsweise einen Behälter für die Suspension, eine Pumpe sowie mindestens eine Leitung, welche Leitung den Behälter, mit der Pumpe und der mindestens einen Destillationseinheit verbindet.

Als Behälter kann jeglicher im Stand der Technik bekannte für Suspensionen geeignete Behälter verwendet werden. Vorzugweise wird hierfür jedoch ein Behälter aus Kunststoff verwendet.

Als Pumpe kann jegliche im Stand der Technik bekannte Pumpe verwendet werden, die dazu geeignet ist, die Suspension durch eine Leitung zu pumpen. Vorzugsweise wird im Zusammenhang mit der gegenständlichen Erfindung jedoch eine Kreiselpumpe verwendet.

Als Leitung kommt hierfür jegliche Leitung, die im Stand der Technik bekannt ist, in Betracht, die dazu geeignet ist die zu entsalzende Suspension zu leiten. Vorzugsweise handelt es sich jedoch um eine Leitung aus Metall oder Kunststoff.

Dadurch, dass die Suspension zumindest zum Teil wieder in eine erfindungsgemäße Destillationseinheit zurückgeführt wird, kann kontinuierlich entsalzt werden und der Destillationsvorgang und der Kristallisationsvorgang kann in einer Leitung bzw. in der Heizleitung bzw. der Destillatleitung durchgeführt werden. Nach Verlassen der Destillationseinheit können somit direkt Kristalle einer bestimmten Größe oder eines bestimmten Gewichts aus der Suspension abgetrennt werden. Eine Membrandestillationseinheit, in der gleichzeitig destilliert und kristallisiert wird, was durch das Rückführen der Suspension in die Destillationseinheit und die ständige Bewegung der Suspension ermöglicht wird, ist im Stand der Technik bisher nicht bekannt.

Für den Fall, dass die Temperatur des erzeugten Lösungsmitteldampfs nicht ausreicht, den Heizabschnitt der nachfolgenden Destillationseinheit zu beheizen, ist in einer Ausführungsform der Erfindung vorgesehen, dass entweder eine Einrichtung umfassend einen Injektor zur Durchführung einer thermischen Dampfverdichtung des Lösungsmitteldampfs oder eine Einrichtung umfassend einen Kompressor zur Durchführung einer mechanischen Dampfverdichtung des Lösungsmitteldampfs vorgesehen ist.

Im Zusammenhang mit der erfindungsgemäßen Vorrichtung, welche mehr als eine Destillationseinheit umfasst, kann entweder die thermische oder die mechanische Lösungsmitteldampfverdichtung durchgeführt werden, abhängig davon, welche im Einsatzgebiet der Vorrichtung als geeigneter erscheint.

Wird die thermische Dampfverdichtung zur Erhöhung der Lösungsmitteldampftemperatur herangezogen, ist in der erfindungsgemäßen Vorrichtung zusätzlich eine Einrichtung umfassend einen Injektor vorgesehen, wobei der Injektor als Treibmedium Dampf aus einem anderen Dampferzeuger bezieht. Mittels des Injektors wird ein Teil des Lösungsmitteldampfs der letzten Destillationseinheit verdichtet. Durch diese Verdichtung wird dieser Teil des Lösungsmitteldampfs auf eine höhere Temperatur gebracht. Der angesaugte Lösungsmitteldampf wird mit dem Treibdampf vermischt und das entstandene Gemisch dient zur Beheizung des Heizabschnitts der ersten Destillationseinheit und wird dort vollständig kondensiert. Die Menge an Kondensat, die dem Treibdampf entspricht, wird wieder dem Dampferzeuger zurückgeführt, um neuerlich Treibdampf zu erzeugen, während das restliche Kondensat aller Destillationseinheiten gesammelt und abgeführt wird. Vorteilhaft an der Verwendung der thermischen Dampfkompression ist, dass eine höhere Energieausbeute erreicht wird.

Wird die mechanische Dampfverdichtung zur Erhöhung der Lösungsmitteldampftemperatur herangezogen, ist in der erfindungsgemäßen Vorrichtung zusätzlich eine Einrichtung umfassend einen Kompressor vorgesehen.

Ist eine Einrichtung umfassend einen Kompressor zur mechanischen Dampfkompression vorgesehen, ist ein Kondensator nicht erforderlich, da der Lösungsmitteldampf aus der letzten Destillationseinheit mittels Kompressor soweit verdichtet wird, dass mit diesem Lösungsmitteldampf die erste Destillationseinheit damit wieder beheizt werden kann und der Lösungsmitteldampf anschließend wieder kondensiert.

Auf Grund dieses Kreislaufs ist die mechanische Verdichtung jedoch lediglich für ein bis zwei Destillationseinheiten geeignet. Vorteilhaft ist jedoch, dass keine Notwendigkeit eines Kühlmediums besteht und nachteilig ist, dass die mechanische Kompression mittels Kompressor elektrischer Energie bedarf.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
Fig. 1 eine Liniendarstellung einer erfindungsgemäßen Destillationseinheit
Fig. 2 ein Flussdiagramm einer erfindungsgemäßen Vorrichtung umfassend einen Behälter, eine Pumpe, eine Destillationseinheit, einen Kondensator sowie eine Klassiereinrichtung
Fig. 3 eine erfindungsgemäße Vorrichtung mit mehreren nacheinander geschalteten Destillationseinheiten
Fig. 4 eine erfindungsgemäße Vorrichtung mit mehreren nacheinander geschalteten Destillationseinheiten umfassend eine Einrichtung zur Durchführung einer thermischen Dampfkompression
Fig. 5 eine erfindungsgemäße Vorrichtung umfassend eine Einrichtung zur Durchführung einer mechanischen Dampfkompression.

### WEGE ZUR AUSFÜHRUNG DER ERFINDUNG

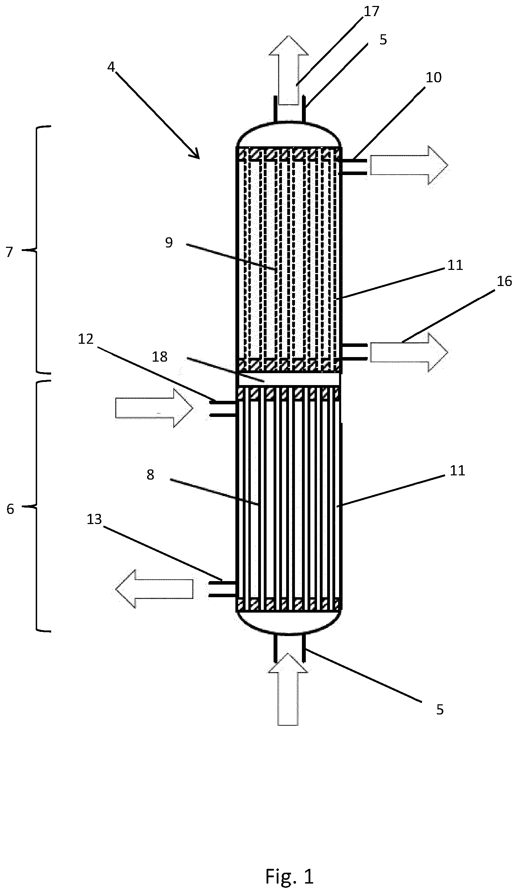

Fig. 1 zeigt eine erfindungsgemäße Destillationseinheit 4, welche im Zusammenhang mit einer erfindungsgemäßen Vorrichtung 1 zum Entsalzen einer Suspension verwendet wird. Die Destillationseinheit 4 ist in einen Heizabschnitt 6 und einen Destillationsabschnitt 7 unterteilt, wobei die beiden Abschnitte voneinander getrennt sind, nämlich durch den Zwischenraum zwischen den Heizleitungen 8 und den Destillatleitungen 9, aber flüssigkeitsleitend miteinander verbunden sind, nämlich über das Innere der Heizleitungen 8 und Destillatleitungen 9. Der Heizabschnitt 6 wird dazu verwendet, die Suspension zu erhitzen. Der Heizabschnitt 6 umfasst hier sieben dargestellte Heizleitungen 8 zum Leiten der Suspension, wobei diese Heizleitungen 8 flüssigkeits- und gasundurchlässig sind. Die Heizleitungen der Fig. 1 sind aus wärmeleitfähigem Kunststoff.

Der Destillationsabschnitt 7 umfasst hier ebenfalls sieben dargestellte Destillatleitungen 9 zum Leiten der erhitzten Suspension. Die Destillatleitungen 9 der Fig. 1 sind aus Polypropylen.

Zwischen den Heizleitungen 8 und den Destillatleitungen 9 ist eine beheizbare Flüssigkeitssammelkammer 18 angeordnet, so dass die erhitzte Suspension von allen Heizleitungen 8 vor dem Weiterleiten in den Destillationsabschnitt 7 dort gesammelt wird.

Fig. 1 zeigt weiter, dass die sieben Heizleitungen 8 und die sieben Destillatleitungen 9, sowie hier auch die Flüssigkeitssammelkammer 18, von einer gemeinsamen Ummantelung 11 umgeben sind. Die Ummantelung, die in der Fig. 1 dargestellt wird, ist aus Polyvinylchlorid (PVC). Zwischen der Ummantelung 11 und den Heizleitungen 8 bzw. den Destillatleitungen 9 befindet sich jeweils ein Zwischenraum mit einem Volumen, in den Flüssigkeit oder Gas aufgenommen werden kann.

Über eine Heizmediumzuleitung 12 wird zwischen die Ummantelung 11 und die sieben Heizleitungen 8 ein Heizmedium zugeführt, um die Suspension in den Heizleitungen 8 zu erhitzen. Da das Heizmedium durch Wärmeaustausch mit der Suspension in den Heizleitungen 8 abkühlt, wird kontinuierlich Heizmedium zugeleitet und das abgekühlte Heizmedium über eine Heizmediumableitung 13 gleichzeitig abgeleitet.

Die erhitzte Suspension wird dann weiter in den beheizten Flüssigkeitssammelbehälter 18 geleitet und von dort weiter in den Destillationsabschnitt 7, genauer die sieben Destillatleitungen 9. Die Destillatleitungen 9 sind als gaspermeable Membranen ausgebildet, so dass der durch das Erhitzen der Suspension entstandene Lösungsmitteldampf durch die Poren der Membran permeieren kann. Der Lösungsmitteldampf gelangt vom Inneren der Destillatleitungen 9 zwischen die Ummantelung 11 und die Destillatleitungen 9. Der in der Fig. 1 gezeigte Destillationsabschnitt umfasst hier zwei Dampfableitungen 10, durch welche der Lösungsmitteldampf ableitbar ist. Vorzugsweise wird der Lösungsmitteldampf mittels Vakuumpumpe abgeleitet (nicht dargestellt).

Die verbleibende Suspension wird durch den Destillationsprozess und das Permeieren des Lösungsmitteldampfs durch die Membran ankonzentriert, wodurch der Sättigungsbereich bzw. der Übersättigungsbereich erreicht wird. Die vorhandenen Kristallisationskeime führen zur Auslösung der Kristallisation, wodurch es zu Kristallbildung und -wachstum kommt. Die Suspension wird aus der Destillationseinheit wieder herausgeleitet.

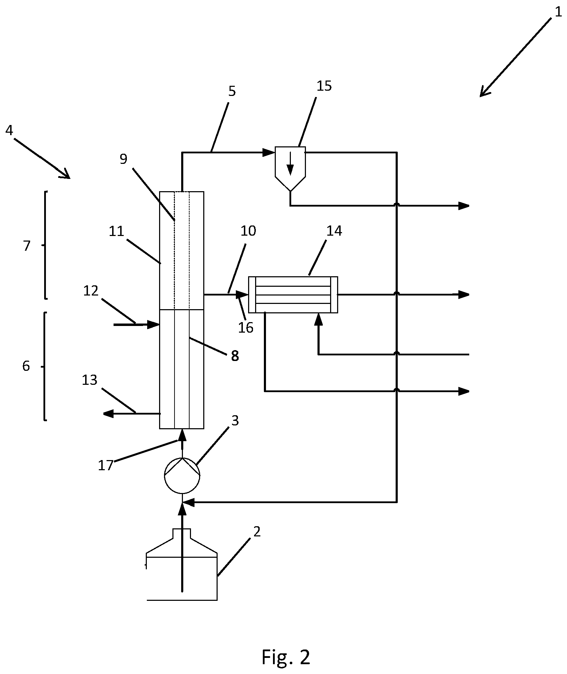

Fig. 2 zeigt ein Flussdiagramm einer erfindungsgemäßen Vorrichtung 1. Die Vorrichtung umfasst einen Behälter 2, in dem die zu entsalzende Suspension vorgelegt wird. Die Suspension wird mittels einer Pumpe 3 aus dem Behälter in eine Destillationseinheit 4 geleitet. Die erfindungsgemäße Destillationseinheit ist in einen Heizabschnitt 6 und einen Destillationsabschnitt 7 unterteilt. Der Heizabschnitt 6 und der Destillationsabschnitt 7 weisen eine gemeinsame Ummantelung 11 auf. Der in der Figur 2 gezeigte Heizabschnitt 6 weist symbolisch nur eine Heizleitung 8 auf, in welcher die Suspension erhitzt wird. Dem Heizabschnitt 6 wird über eine Heizmediumzuleitung 12 ein Heizmedium zugeführt, wobei das Heizmedium zwischen eine Ummantelung 11 und eine Heizleitung 8 zugeführt wird. Das Heizmedium wird kontinuierlich durch neues Heizmedium ersetzt, da das Heizmedium durch Wärmeaustausch mit der Suspension abkühlt. Das Heizmedium wird dabei durch die Heizmediumableitung 13 aus dem Heizabschnitt abgeleitet.

Im Unterschied zur Fig. 1 wird die Suspension in Fig. 2 direkt, ohne Flüssigkeitssammelkammer 18, vom Heizabschnitt 6 weiter in den Destillationsabschnitt 7, also direkt von einer/jeder Heizleitung 8 in eine Destillatleitung 9 geleitet, wo entstandener Lösungsmitteldampf durch die als Membran ausgebildete Destillatleitung 9 zwischen die Ummantelung 11 und die Destillatleitung 9 permeieren kann. Der Lösungsmitteldampf wird über eine Dampfableitung 10 abgeleitet und einem Kondensator 14 zugeführt. In Fig. 2 ist ersichtlich, dass in Flussrichtung 16 des Lösungsmitteldampfes gesehen der Kondensator 14 nach der Destillationseinheit 4 angeordnet ist. Der kondensierte Lösungsmitteldampf kann dann seiner weiteren Verwendung zugeführt werden.

Die in der Destillatleitung 9 verbleibende ankonzentrierte Suspension wird aus der Destillationseinheit hinausgeleitet. Durch die Ankonzentrierung kommt es auf Grund der vorhandenen Kristallisationskeime zur Kristallbildung- und wachstum. In Flussrichtung 17 der Suspension gesehen ist nach der Destillationseinheit 4 eine Klassiereinrichtung 15 angeordnet, mit welcher Kristalle eines bestimmten Gewichts oder einer bestimmten Größe abgetrennt werden können. Über eine Leitung 5 wird die Suspension wieder an den Eingang der Destillationseinheit 4 zurückgeführt, hier zwischen dem Behälter 2 und der Pumpe 3.

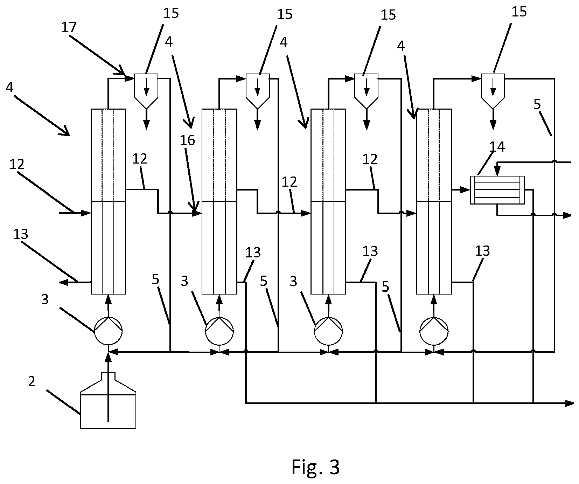

Fig. 3 zeigt ein Flussdiagramm einer erfindungsgemäßen Vorrichtung 1, bei welcher vier Destillationseinheiten 4 nacheinander geschaltet sind. Die Vorrichtung ist entsprechend der Vorrichtung in Fig. 2 aufgebaut, mit dem Unterschied, dass vier Destillationseinheiten 4 umfasst sind. Die zu entsalzende Suspension wird aus dem Behälter 2 mittels der Pumpe 3 in die erste Destillationseinheit 4 gepumpt, wobei die Suspension im Heizabschnitt 6 der ersten Destillationseinheit 4 erhitzt und im Destillationsabschnitt 7 der ersten Destillationseinheit 4 der durch das Erhitzen entstandene Lösungsmitteldampf abgetrennt wird. Zum Erhitzen der Suspension wird gemäß der Fig. 3 über eine Heizmediumzuleitung 12 zwischen die Ummantelung 11 und die Heizleitung 8 ein Heizmedium, in diesem Fall Wasserdampf, zugeführt. Um ein konstant warmes Heizmedium gewährleisten zu können, wird das Heizmedium kontinuierlich über eine Heizmediumableitung 13 abgeleitet und neues Heizmedium über die Heizmediumzuleitung 12 zugeführt.

Der Lösungsmitteldampf wird über eine Dampfableitung 10 aus dem Destillationsabschnitt 7 abgeleitet, wobei die Dampfableitung 10 der ersten Destillationseinheit 4 als Heizmediumzuleitung 12 der zweiten und damit nachfolgenden Destillationseinheit 4 verwendet wird, so dass der von der Suspension abgetrennte Lösungsmitteldampf als Heizmedium für die nachfolgende Destillationseinheit 4 dient.

Die durch das Passieren der Destillationseinheit 4 ankonzentrierte Suspension wird aus der ersten Destillationseinheit 4 über eine Leitung 5 herausgeleitet. In Flussrichtung 17 der Suspension gesehen ist nach der ersten Destillationseinheit 4 eine Klassiereinrichtung 15 angeordnet, mit welcher Kristalle einer bestimmten Größe oder eines bestimmten Gewichts abgeleitet werden können. Da als erstes insbesondere schwerlösliche Salze ausfallen, können daher in einem ersten Schritt vor allem Salze wie CaCO₃ oder CaSO₄ abgetrennt werden.

Die verbleibende Suspension kann optional mit neuen Kristallisationskeimen versetzt werden, um auch nachfolgend noch eine ausreichende Kristallisation gewährleisten zu können. Die verbleibende Suspension wird dann über die Leitung 5 in eine zweite nachfolgende Destillationseinheit 4 geleitet, welche vom Aufbau der ersten Destillationseinheit 4 entspricht, und/oder in die erste Destillationseinheit 4 zurückgeführt. Die Suspension wird in der zweiten Destillationseinheit wieder im Heizabschnitt 6 erhitzt und im Destillationsabschnitt 7 wird der entstandene Lösungsmitteldampf über eine Dampfableitung 10 abgeleitet. Die Dampfableitung 10 der zweiten Destillationseinheit 4 entspricht nunmehr der Heizmediumzuleitung 12 der nachfolgenden dritten Destillationseinheit 4.

Die durch das Passieren zweier Destillationseinheiten 4 weiter ankonzentrierte Suspension wird aus der zweiten Destillationseinheit 4 über eine Leitung 5 abgeleitet. In Flussrichtung 17 der Suspension gesehen ist nach der zweiten Destillationseinheit 4 wieder eine Klassiereinrichtung 15 angeordnet, um Kristalle mit einem bestimmten Gewicht oder einer bestimmten Größe abtrennen zu können. Da die Salzkonzentration in der Suspension höher als nach Passieren der ersten Destillationseinheit 4 ist, fallen in diesem zweiten Schritt zusammen mit den restlichen schwerlöslichen Salzen bereits Salze aus, die eine Suspension mit höherer Salzkonzentration zum Ausfallen erfordern.

Die verbleibende Suspension kann optional mit neuen Kristallisationskeimen versetzt werden, um auch nachfolgend noch eine ausreichende Kristallisation gewährleisten zu können. Die verbleibende Suspension wird dann über die Leitung 5 in eine dritte nachfolgende Destillationseinheit 4 geleitet, welche vom Aufbau der ersten und der zweiten Destillationseinheit 4 entspricht, und/oder in die zweite 4 zurückgeführt. Die Suspension wird in der dritten Destillationseinheit wieder im Heizabschnitt 6 erhitzt und im Destillationsabschnitt 7 wird der entstandene Lösungsmitteldampf über eine Dampfableitung 10 abgeleitet. Die Dampfableitung 10 der dritten Destillationseinheit 4 entspricht nunmehr der Heizmediumzuleitung 12 der nachfolgenden vierten Destillationseinheit 4.

Die durch das Passieren dreier Destillationseinheiten 4 noch weiter ankonzentrierte Suspension wird aus der dritten Destillationseinheit über eine Leitung 5 abgeleitet. In Flussrichtung 17 der Suspension gesehen ist nach der dritten Destillationseinheit 4 wieder eine Klassiereinrichtung 15 angeordnet, um Kristalle mit einem bestimmten Gewicht oder einer bestimmten Größe abtrennen zu können. Da die Salzkonzentration in der Suspension noch höher als nach Passieren der zweiten Destillationseinheit 4 ist, fallen nunmehr auch Salze aus, welche zum Ausfallen eine noch höhere Salzkonzentration benötigen als jene Salzkonzentration, welche nach Passieren der zweiten Destillationseinheit 4 vorliegt.

Die verbleibende Suspension kann optional mit neuen Kristallisationskeimen versetzt werden, um auch nachfolgend noch eine ausreichende Kristallisation gewährleisten zu können. Die verbleibende Suspension wird dann über die Leitung 5 in eine vierte nachfolgende Destillationseinheit 4 geleitet, welche vom Aufbau im Wesentlichen der ersten, der zweiten sowie der dritten Destillationseinheit 4 entspricht, und/oder in die dritte Destillationseinheit 4 zurückgeführt. Die Suspension wird in der vierten Destillationseinheit 4 wieder im Heizabschnitt 6 erhitzt und im Destillationsabschnitt 7 wird der entstandene Lösungsmitteldampf über eine Dampfableitung 10 abgeleitet. Das Kondensat, welches durch den vierten Kondensator 14 erhalten wird, wird mit dem Kondensat der vorgeschalteten Destillationseinheiten 4 zusammengeführt und seiner weiteren Verwendung zugeführt oder verworfen.

Die durch das Passieren vierer Destillationseinheiten 4 noch weiter ankonzentrierte Suspension wird aus der vierten Destillationseinheit 4 über eine Leitung 5 abgeleitet. In Flussrichtung 17 der Suspension gesehen ist nach der vierten Destillationseinheit 4 wieder eine Klassiereinrichtung 15 angeordnet, um Kristalle mit einem bestimmten Gewicht oder eine bestimmten Größe abtrennen zu können.

Da die Salzkonzentration in der Suspension nun noch höher als nach Passieren der dritten Destillationseinheit 4 ist, fallen nunmehr auch leichtlösliche Salze wie NaCl aus, welche zum Ausfallen eine noch höhere Salzkonzentration erfordern als jene Salzkonzentration, welche nach Passieren der dritten Destillationseinheit 4 vorliegt.

Mit dem Hintereinanderschalten von mehreren Destillationseinheiten kann damit auch eine teilweise Salztrennung erreicht werden, welche die Weiterverarbeitung oder nachfolgende weitere Aufreinigung der Salze erleichtert.

Die verbleibende Suspension wird über die Leitung 5 zusammen mit frischer Suspension wieder der vierten Destillationseinheit 4 zugeführt.

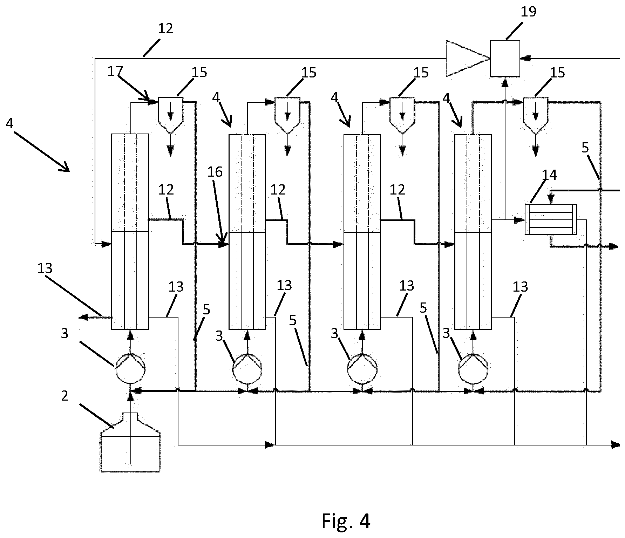

Fig. 4 zeigt ebenfalls ein Flussdiagramm einer erfindungsgemäßen Vorrichtung 1, bei welcher vier Destillationseinheiten 4 nacheinander geschaltet sind. Die Vorrichtung 1 ist hier im Wesentlichen entsprechend der Vorrichtung 1 in Fig. 3 aufgebaut. Die Vorrichtung 1 gemäß der Fig. 4 unterscheidet sich von der Vorrichtung 1 gemäß der Fig. 3 dahingehend, dass eine Einrichtung zur Durchführung einer thermischen Dampfkompression umfasst ist. Die Einrichtung zur Durchführung einer thermischen Dampfkompression umfasst einen Injektor 19. Mittels dieses Injektors 19 wird ein Teil des Lösungsmitteldampfs nach der vierten Destillationseinheit 4 abgeführt und verdichtet, unter Verwendung von Treibdampf aus einer anderen Dampfquelle. Der Treibdampf vermischt sich mit dem Lösungsmitteldampf und wird über die Heizmediumzuleitung 12 in den Heizabschnitt 6 der ersten Destillationseinheit 4 geleitet, um dort als Heizmedium die Suspension zu erhitzen und dann selbst zu kondensieren. Eine Menge an Kondensatgemisch, d.h. dem Gemisch aus dem Treibdampf und dem Lösungsmitteldampf, die dem ursprünglichen Treibdampf entspricht, wird zum Dampferzeuger (nicht dargestellt) rückgeführt. Das restliche Kondensat, das der Saugdampfmenge, also dem Lösungsmitteldampfs nach der vierten Destillationseinheit 4, entspricht, wird mit dem Kondensat der restlichen Destillationseinheiten 4 als Destillat abgeführt.

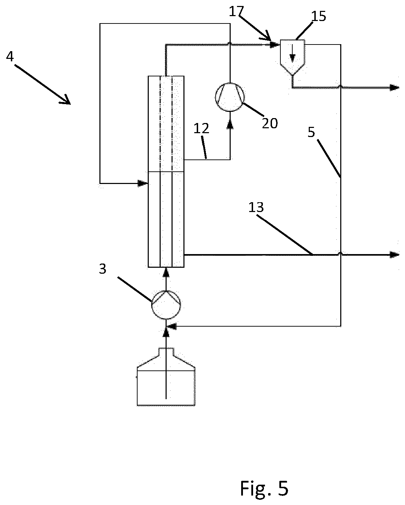

Fig. 5 zeigt eine Vorrichtung 1 wie in Fig. 2 offenbart, jedoch mit dem Unterschied, dass zusätzlich eine Einrichtung zur Durchführung einer mechanischen Dampfkompression umfasst ist. Die Einrichtung zur Durchführung einer mechanischen Dampfkompression umfasst einen Kompressor 20, welcher den entstandenen Lösungsmitteldampf, der aus der Destillationseinheit 4 stammt, verdichtet. Dieser verdichtete Lösungsmitteldampf wird dann als Heizmedium für den Heizabschnitt 6 herangezogen und mittels Heizmediumzuleitung 12 dem Heizabschnitt 6 zugeführt, um die Suspension zu erhitzen. Durch das Erhitzen der Suspension kondensiert der Lösungsmitteldampf und das Kondensat wird über die Heizmediumableitung 13 abgeleitet. Der im Destillationsabschnitt 7 entstandene Lösungsmitteldampf der Destillationseinheit 4 wird wiederum mittels Kompressor 20 verdichtet und als Heizmedium verwendet usw.

Alternativ kann auch eine einzelne Destillationseinheit 4 zur Auskristallisation verschiedener Salze herangezogen werden (nicht in den Figuren dargestellt). Dabei wird lediglich einmal zu Beginn des Auskristallisationsprozesses Suspension zur Destillationseinheit 4 zugeführt und die Vorrichtung in der Folge im sogenannten Batch-Betrieb betrieben. Die Suspension wird nach dem Verlassen der Destillationseinheit 4 wieder vollständig in die Destillationseinheit 4 zurückgeleitet und wird dann neuerlich durch die Destillationseinheit 4 durchgeführt. In einem derartigen Batch-Betrieb ist es möglich, eine Abtrennung von unterschiedlichen Salzen, welche im Salzgemisch der Suspension vorliegen, bei unterschiedlichen Konzentrationen zu kristallisieren, wobei es nach jedem Durchlauf durch die Destillationseinheit 4 zu einer Ankonzentrierung der Suspension kommt. In jedem Durchlauf durch die Destillationseinheit 4 kristallisieren daher auch andere Salze aus, die dann in der Folge von der der Destillationseinheit 4 nachgeschalteten Klassiereinrichtung 15 abgetrennt werden können.

Das bedeutet, dass das Entsalzen bzw. Auskristallisieren der Salze einerseits im kontinuierlichen Betrieb einer einzelnen Destillationseinheit 4 oder mehreren nacheinander geschalteten Destillationseinheiten 4 erfolgen kann, wobei hier jeweils zumindest in der einen bzw. ersten Destillationseinheit 4 kontinuierlich zu entsalzende Suspension zugegeben wird. Andererseits kann das Entsalzen bzw. Auskristallisieren der Salze auch im Batchbetrieb, auch Chargen-Betrieb genannt, einer einzelnen Destillationseinheit 4 oder mehrerer nacheinander geschalteter Destillationseinheiten 4 erfolgen.

### BEZUGSZEICHENLISTE

- 1: Vorrichtung zum Entsalzen einer Suspension
- 2: Behälter für die Suspension
- 3: Pumpe
- 4: Destillationseinheit
- 5: Leitung
- 6: Heizabschnitt
- 7: Destillationsabschnitt
- 8: Heizleitung
- 9: Destillatleitung
- 10: Dampfableitung
- 11: Ummantelung
- 12: Heizmediumzuleitung
- 13: Heizmediumableitung
- 14: Kondensator
- 15: Klassiereinrichtung
- 16: Flussrichtung des Lösungsmitteldampfs
- 17: Flussrichtung der Suspension
- 18: Flüssigkeitssammelkammer
- 19: Injektor
- 20: Kompressor

## Patentansprüche

1. Verfahren zum Entsalzen einer Suspension,
- wobei die Suspension in eine in einen Heizabschnitt (6) und einen Destillationsabschnitt (7) unterteilte Destillationseinheit (4), wobei der Heizabschnitt (6) und der Destillationsabschnitt (7) flüssigkeitsleitend miteinander verbunden sind, geleitet wird,
- wobei die Suspension zuerst in zumindest eine flüssigkeits- und gasundurchlässige Heizleitung (8) des Heizabschnitts (6) der Destillationseinheit (4) geleitet und dort erhitzt wird, wobei der Heizabschnitt (6) vom Destillationsabschnitt (7) getrennt ist, sodass kein Heizmedium in den Destillationsabschnitt (7) gelangen kann,
- wobei die erhitzte Suspension dann in zumindest eine als gaspermeable Membran ausgebildete Destillatleitung (9) des Destillationsabschnitts (7) der Destillationseinheit (4) weitergeleitet wird, sodass entstehender Lösungsmitteldampf über die gaspermeable Membran aus der Destillatleitung (9) permeiert und über eine Dampfableitung (10) aus dem Destillationsabschnitt (7) entfernt wird,
- wobei die Destillationseinheit (4) eine gemeinsame Ummantelung (11) aufweist, die die mindestens eine Heizleitung (8) und die mindestens eine Destillatleitung (9) umgibt,
- wobei die Suspension durch das Entfernen des Lösungsmitteldampfs ankonzentriert wird, und
- wobei zumindest ein Teil der Suspension nach Verlassen der Destillationseinheit (4) wieder in die Destillationseinheit (4) zurückgeleitet wird,
**dadurch gekennzeichnet, dass** die Suspension auf Grund der geradlinig verlaufenden in der gleichen Richtung angeordneten Heizleitung (8) und Destillatleitung (9) geradlinig durch die Destillationseinheit (4) fließt, wobei bei der gemeinsamen Ummantelung (11) der Heizabschnitt (6) vom Destillationsabschnitt (7) getrennt ist, so dass kein Heizmedium in den Destillationsabschnitt (7) gelangen kann,
und wobei die Ummantelung (11) ein Zylinder oder eine andere Form der Ummantelung (11) ist, wobei dessen Länge zumindest der Länge einer Destillatleitung (9) plus der Länge einer Heizleitung (8) entspricht.

2. Verfahren nach Anspruch 1, **dadurch gekennzeichnet, dass** der Suspension Kristallisationskeime zugegeben werden, sodass eine Kristallisation von ankonzentrierten Salzen in der Destillatleitung (9) erfolgt.

3. Verfahren nach einem der Ansprüche 1 oder 2, **dadurch gekennzeichnet, dass** der Lösungsmitteldampf mittels einer Vakuumpumpe über die Destillatleitung (9) aus dem Destillationsabschnitt (7) abgeleitet wird.

4. Verfahren nach einem der Ansprüche 1 bis 3, **dadurch gekennzeichnet, dass** der Heizabschnitt (6) mittels Wasser oder Gas als Heizmedium beheizt wird.

5. Verfahren nach einem der Ansprüche 1 bis 4, **dadurch gekennzeichnet, dass** entstandene Salzkristalle mittels Klassiereinrichtung (15) abgetrennt werden, wobei die Klassiereinrichtung (15) in Flussrichtung (17) der Suspension gesehen hinter der Destillationseinheit (4) angeordnet ist.

6. Verfahren nach einem der Ansprüche 1 bis 5, **dadurch gekennzeichnet, dass** der Lösungsmitteldampf mittels eines Kondensators (14) kondensiert wird, wobei der Kondensator (14) in Flussrichtung (16) des Lösungsmitteldampfs gesehen hinter der Destillationseinheit (4) angeordnet ist.

7. Verfahren nach einem der Ansprüche 1 bis 6, **dadurch gekennzeichnet, dass** mehrere Destillationseinheiten (4) hintereinander angeordnet und miteinander verbunden werden und dass zumindest ein Teil des Lösungsmitteldampfs der vorherigen Destillationseinheit (4) zum Beheizen der nachfolgenden Destillationseinheit (4) verwendet wird.

8. Verfahren nach einem der Ansprüche 1 bis 7, **dadurch gekennzeichnet, dass** eine Salzkonzentration der Suspension bei einem Passieren mehrerer Destillationseinheiten (4) durch das Entfernen des Lösungsmitteldampfes nach jeder Destillationseinheit (4) weiter ansteigt, und zumindest nach zwei Destillationseinheiten (4) unterschiedliche Salze abgetrennt werden.

9. Verfahren nach einem der Ansprüche 1 bis 8, **dadurch gekennzeichnet, dass** das Verfahren im kontinuierlichen Betrieb oder im Batch-Betrieb durchgeführt wird.

10. Vorrichtung (1) zum Entsalzen einer Suspension zur Anwendung mit einem Verfahren gemäß einem der Ansprüche 1 bis 9, umfassend eine Destillationseinheit (4) umfassend mindestens eine Destillatleitung (9), wobei
- die Destillationseinheit (4) in einen Heizabschnitt (6) und einen Destillationsabschnitt (7) unterteilt ist,
- wobei der Heizabschnitt (6) und der Destillationsabschnitt (7) flüssigkeitsleitend miteinander verbunden sind, aber der Heizabschnitt (6) vom Destillationsabschnitt (7) getrennt ist, sodass kein Heizmedium in den Destillationsabschnitt (7) gelangen kann,
- wobei der Heizabschnitt (6) mindestens eine Heizleitung (8) zum Leiten und Erhitzen der Suspension umfasst,
- wobei der Destillationsabschnitt (7) mindestens eine Destillatleitung (9) zum Leiten der erhitzten Suspension und mindestens eine Dampfableitung (10) zum Ableiten des Lösungsmitteldampfs umfasst,
- wobei die mindestens eine Heizleitung (8) sowie die mindestens eine Destillatleitung (9) von einer gemeinsamen Ummantelung (11) umgeben ist,
- wobei der Heizabschnitt (6) mindestens eine Heizmediumzuleitung (12) sowie mindestens eine Heizmediumableitung (13) umfasst, sodass ein Heizmedium zwischen die Ummantelung (11) des Heizabschnitts (6) und die mindestens eine Heizleitung (8) zuführbar und abführbar ist,
- wobei die mindestens eine Heizleitung (8) impermeabel für Gas und Flüssigkeiten ist,
- wobei die zumindest eine Destillatleitung (9) als gaspermeable Membran ausgebildet ist, sodass die gaspermeable Membran für Lösungsmitteldampf passierbar ist, und
- wobei der Lösungsmitteldampf nach dem Passieren der gaspermeablen Membran zwischen der Ummantelung (11) und der zumindest einen Destillatleitung (9) sammelbar ist,
**dadurch gekennzeichnet, dass**
die mindestens eine Heizleitung (8) und die mindestens eine Destillatleitung (9) in der gleichen Richtung angeordnet sind und damit geradlinig durch den Heizabschnitt (6) bzw. Destillationsabschnitt (7) verlaufen, sodass die Suspension geradlinig durch die Destillationseinheit (4) verläuft,
wobei bei der gemeinsamen Ummantelung (11) der Heizabschnitt (6) vom Destillationsabschnitt (7) getrennt ist, so dass kein Heizmedium in den Destillationsabschnitt (7) gelangen kann,
und wobei die Ummantelung (11) ein Zylinder oder eine andere Form der Ummantelung (11) ist, wobei dessen Länge zumindest der Länge einer Destillatleitung (9) plus der Länge einer Heizleitung (8) entspricht.

11. Vorrichtung (1) nach Anspruch 10, **dadurch gekennzeichnet, dass** zumindest eine Heizleitung (8) in eine Destillatleitung (9) übergeht.

12. Vorrichtung (1) nach einem der Ansprüche 10 oder 11,
**dadurch gekennzeichnet, dass** zwischen Heizabschnitt (6) und dem Destillationsabschnitt (7) weiters eine, vorzugsweise beheizbare, Flüssigkeitssammelkammer (18) angeordnet ist, deren Querschnitt größer als ein Querschnitt einer Heizleitung (8) oder einer Destillatleitung (9) ist.

13. Vorrichtung (1) nach einem der Ansprüche 10 bis 12,
**dadurch gekennzeichnet, dass** die Vorrichtung (1) weiters einen Kondensator (14) umfasst, wobei der Kondensator (14) in Flussrichtung (16) des Lösungsmitteldampfs gesehen hinter der Destillationseinheit (4) angeordnet ist, um den Lösungsmitteldampf zu kondensieren.

14. Vorrichtung (1) nach einem der Ansprüche 10 bis 13,
**dadurch gekennzeichnet, dass** die Vorrichtung weiters mindestens eine Klassierungseinrichtung (15) zum Abtrennen der Suspensionskristalle umfasst, wobei die Klassiereinrichtung (15) in Flussrichtung (17) der Suspension gesehen hinter der Destillationseinheit (4) angeordnet ist.

15. Vorrichtung (1) nach einem der Ansprüche 10 bis 14,
**dadurch gekennzeichnet, dass** die Vorrichtung (1) mehrere hintereinander angeordnete miteinander verbundene Destillationseinheiten (4) umfasst, wobei die Dampfableitung (10) der vorherigen Destillationseinheit (4) die Heizmediumzuleitung (12) der nachfolgenden Destillationseinheit (4) bildet.

## Claims

1. A method for the desalination of a suspension,
- wherein the suspension is conducted into a distillation unit (4) which is divided into a heating section (6) and a distillation section (7), wherein the heating section (6) and the distillation section (7) are in fluid communication with each other,
- wherein the suspension is initially directed into at least one liquid-impermeable and gas-impermeable heating conduit (8) of the heating section (6) of the distillation unit (4) and heated therein, wherein the heating section (6) is separated from the distillation section (7) so that no heating medium can gain access to the distillation section (7),
- wherein the heated suspension is then transferred into at least one distillate conduit (9) of the distillation section (7) of the distillation unit (4) which is configured as a gas-permeable membrane, so that solvent vapour which is generated permeates out of the distillate conduit (9) via the gas-permeable membrane and is removed from the distillation section (7) via a vapour discharge conduit (10),
- wherein the distillation unit (4) has a common casing (11) which surrounds the at least one heating conduit (8) and the at least one distillate conduit (9),
- wherein the suspension is concentrated by the removal of the solvent vapour, and
- wherein, after leaving the distillation unit (4), at least a portion of the suspension is fed back into the distillation unit (4)
**characterized in that** the suspension flows through the distillation unit (4) in a straight line, because the heating conduit (8) and the distillate conduit (9) are disposed to run in a straight line in the same direction, wherein in the common casing (11) the heating section (6) is separated from the distillation section (7) so that no heating medium can gain access to the distillation section (7) and wherein the casing (11) is a cylinder or another shape of casing (11), the length of which corresponds at least to the length of a distillate conduit (9) plus the length of the heating conduit (8).

2. The method according to claim 1, **characterized in that** seed crystals are added to the suspension so that a crystallization of concentrated salts occurs in the distillate conduit (9).

3. The method according to claim 1 or claim 2, **characterized in that** the solvent vapour is discharged from the distillation section (7) via the distillate conduit (9) by means of a vacuum pump.

4. The method according to any one of claims 1 to 3, **characterized in that** the heating section (6) is heated by means of water or gas as heating medium.

5. The method according to any one of claims 1 to 4, **characterized in that** the salt crystals which are generated are separated by means of a screening means (15), wherein the screening means (15) is disposed downstream of the distillation unit (4) when viewed in the direction of flow (17) of the suspension.

6. The method according to any one of claims 1 to 5, **characterized in that** the solvent vapour is condensed by means of a condenser (14), wherein the condenser (14) is disposed downstream of the distillation unit (4) when viewed in the direction of flow (16) of the solvent vapour.

7. The method according to any one of claims 1 to 6, **characterized in that** several distillation units (4) are disposed one after the other and are connected together and **in that** at least a portion of the solvent vapour from the previous distillation unit (4) is used to heat the subsequent distillation unit (4).

8. The method according to any one of claims 1 to 7, **characterized in that** a salt concentration of the suspension increases further upon passage through several distillation units (4) by means of the removal of the solvent vapour after each distillation unit (4), and different salts are separated out after at least two distillation units (4).

9. The method according to any one of claims 1 to 8, **characterized in that** the method is carried out in continuous mode operation or in batch mode operation.

10. A device (1) for the desalination of a suspension for use with a method according to any one of claims 1 to 9, comprising a distillation unit (4) comprising at least one distillate conduit (9), wherein
- the distillation unit (4) is divided into a heating section (6) and a distillation section (7),
- wherein the heating section (6) and the distillation section (7) are in fluid communication with each other, but the heating section (6) is separated from the distillation section (7) so that no heating medium can gain access to the distillation section (7),
- wherein the heating section (6) comprises at least one heating conduit (8) for conducting and heating the suspension,
- wherein the distillation section (7) comprises at least one distillate conduit (9) for conducting the heated suspension and at least one vapour discharge conduit (10) for discharging the solvent vapour,
- wherein the at least one heating conduit (8) as well as the at least one distillate conduit (9) are surrounded by a common casing (11),
- wherein the heating section (6) comprises at least one heating medium supply conduit (12) as well as at least one heating medium discharge conduit (13), so that a heating medium can be supplied and discharged between the casing (11) of the heating section (6) and the at least one heating conduit (8),
- wherein the at least one heating conduit (8) is impermeable to gases and liquids,
- wherein the at least one distillate conduit (9) is configured as a gas-permeable membrane so that solvent vapour can pass through the gas-permeable membrane, and
- wherein, after passing through the gas-permeable membrane, the solvent vapour is collectible between the casing (11) and the at least one distillate conduit (9),
**characterized in that**
the at least one heating conduit (8) and the at least one distillate conduit (9) are disposed in the same direction and therefore run in a straight line through the heating section (6) or the distillation section (7), so that the suspension runs through the distillation unit (4) in a straight line,
wherein in the common casing (11) the heating section (6) is separated from the distillation section (7), so that no heating medium can gain access to the distillation section (7),
and wherein the casing (11) is a cylinder or another shape of casing (11), the length of which corresponds at least to the length of a distillate conduit (9) plus the length of the heating conduit (8).

11. The device (1) according to claim 10, **characterized in that** the at least one heating conduit (8) merges into the at least one distillate conduit (9).

12. The device (1) according to claim 10 or claim 11, **characterized in that** a liquid collecting chamber (18), which can preferably be heated, is disposed between the heating section (6) and the distillation section (7) and has a cross section which is larger than a cross section of one heating conduit (8) or of one distillate conduit (9).

13. The device (1) according to any one of claims 10 to 12, **characterized in that** the device (1) furthermore comprises a condenser (14), wherein, when viewed in the direction of flow (16) of the solvent vapour, the condenser (14) is disposed downstream of the distillation unit (4) in order to condense the solvent vapour.

14. The device (1) according to any one of claims 10 to 13, **characterized in that** the device furthermore comprises at least one screening means (15) for separating the suspension crystals, wherein the screening means (15) is disposed downstream of the distillation unit (4) when viewed in the direction of flow (17) of the suspension.

15. The device (1) according to any one of claims 11 to 14, **characterized in that** the device (1) comprises several distillation units (4) which are disposed one after the other and are connected together, wherein the vapour discharge conduit (10) for the previous distillation unit (4) forms the heating medium supply conduit (12) for the subsequent distillation unit (4).

## Revendications

1. Procédé de dessalement d'une suspension,
- dans lequel la suspension est dirigée dans une unité de distillation (4) subdivisée en une partie chauffage (6) et une partie distillation (7), dans lequel la partie chauffage (6) et la partie distillation (7) sont reliées ensemble par communication fluidique,
- dans lequel la suspension est d'abord dirigée dans au moins une conduite de chauffage (8) non perméable aux liquides et aux gaz de la partie chauffage (6) de l'unité de distillation (4) et y est chauffée, dans lequel la partie chauffage (6) est séparée de la partie distillation (7) de sorte qu'aucun milieu chauffant ne puisse atteindre la partie distillation (7),
- dans lequel la suspension chauffée est ensuite transférée dans au moins une conduite de distillation (9), conçue comme une membrane perméable aux gaz, de la partie distillation (7) de l'unité de distillation (4), de sorte que la vapeur de solvant produite traverse la membrane perméable aux gaz à partir de la conduite de distillation (9) et est évacuée de la partie distillation (7) par une dérivation de vapeur (10),
- dans lequel l'unité de distillation (4) présente une enveloppe (11) commune qui entoure l'au moins une conduite de chauffage (8) et l'au moins une conduite de distillation (9),
- dans lequel la suspension est concentrée du fait de l'évacuation de la vapeur de solvant et
- dans lequel au moins une partie de la suspension est recyclée dans l'unité de distillation (4) après avoir quitté l'unité de distillation (4),
**caractérisé en ce que** la suspension, en raison de la disposition en ligne droite de la conduite de chauffage (8) et de la conduite de distillation (9) dans la même direction, s'écoule en ligne droite à travers l'unité de distillation (4),
dans lequel la partie chauffage (6) est séparée de la partie distillation (7) au niveau de l'enveloppe (11) commune de sorte qu'aucun milieu chauffant ne puisse atteindre la partie distillation (7),
et dans lequel l'enveloppe (11) est un cylindre ou une autre forme de l'enveloppe (11), dans lequel sa longueur correspond au moins à la longueur d'une conduite de distillation (9) plus la longueur d'une conduite de chauffage (8).

2. Procédé selon la revendication 1, **caractérisé en ce que** des germes de cristallisation sont ajoutés à la suspension de sorte qu'il se produit une cristallisation de sels concentrés dans la conduite de distillation (9).

3. Procédé selon l'une des revendications 1 ou 2, **caractérisé en ce que** la vapeur de solvant est dirigée hors de la partie distillation (7) par la conduite de distillation (9) au moyen d'une pompe à vide.

4. Procédé selon l'une des revendications 1 à 3, **caractérisé en ce que** la partie chauffage (6) est chauffée au moyen d'eau ou de gaz comme milieu chauffant.

5. Procédé selon l'une des revendications 1 à 4, **caractérisé en ce que** des cristaux de sels produits sont séparés au moyen d'un dispositif de classement (15), dans lequel le dispositif de classement (15) est disposé derrière l'unité de distillation (4) vu dans le sens d'écoulement (17) de la suspension.

6. Procédé selon l'une des revendications 1 à 5, **caractérisé en ce que** la vapeur de solvant est condensée au moyen d'un condenseur (14), dans lequel le condenseur (14) est disposé derrière l'unité de distillation (4) vu dans le sens d'écoulement (16) de la vapeur de solvant.

7. Procédé selon l'une des revendications 1 à 6, **caractérisé en ce que** plusieurs unités de distillation (4) sont disposées les unes derrière les autres et sont reliées ensemble et qu'au moins une partie de la vapeur de solvant de l'unité de distillation (4) précédente est employée pour le chauffage de l'unité de distillation (4) suivante.

8. Procédé selon l'une des revendications 1 à 7, **caractérisé en ce qu'**une concentration en sel de la suspension lors du passage à travers plusieurs unités de distillation (4) augmente de plus en plus du fait de l'évacuation de la vapeur de solvant après chaque unité de distillation (4), et des sels différents sont séparés au moins après deux unités de distillation (4).

9. Procédé selon l'une des revendications 1 à 8, **caractérisé en ce que** le procédé est exécuté en continu ou par lots.

10. Dispositif (1) de dessalement d'une suspension pour l'emploi avec un procédé selon l'une des revendications 1 à 9, comprenant une unité de distillation (4) comprenant au moins une conduite de distillation (9), dans lequel
- l'unité de distillation (4) est subdivisée en une partie chauffage (6) et une partie distillation (7),
- dans lequel la partie chauffage (6) et la partie distillation (7) sont reliées ensemble par communication fluidique, mais la partie chauffage (6) est séparée de la partie distillation (7) de sorte qu'aucun milieu chauffant ne puisse atteindre la partie distillation (7),
- dans lequel la partie chauffage (6) comprend au moins une conduite de chauffage (8) pour diriger et chauffer la suspension,
- dans lequel la partie distillation (7) comprend au moins une conduite de distillation (9) pour diriger la suspension chauffée et au moins une dérivation de vapeur (10) pour séparer la vapeur de solvant,
- dans lequel l'au moins une conduite de chauffage (8) ainsi que l'au moins une conduite de distillation (9) sont entourées d'une enveloppe (11) commune,
- dans lequel la partie chauffage (6) comprend au moins une alimentation de milieu chauffant (12) ainsi qu'au moins une dérivation de milieu chauffant (13) de sorte qu'un milieu chauffant puisse être introduit et évacué entre l'enveloppe (11) de la partie chauffage (6) et l'au moins une conduite de chauffage (8),
- dans lequel l'au moins une conduite de chauffage (8) est imperméable aux gaz et aux liquides,
- dans lequel l'au moins une conduite de distillation (9) est conçue comme une membrane perméable aux gaz de sorte que la membrane perméable aux gaz puisse être traversée par la vapeur de solvant, et
- dans lequel la vapeur de solvant peut être rassemblée après la traversée de la membrane perméable aux gaz entre l'enveloppe (11) et l'au moins une conduite de distillation (9),
**caractérisé en ce que**
l'au moins une conduite de chauffage (8) et l'au moins une conduite de distillation (9) sont disposées dans le même sens et s'étendent ainsi en ligne droite à travers la partie chauffage (6), respectivement, la partie distillation (7), de sorte que la suspension s'étende en ligne droite à travers l'unité de distillation (4),
dans lequel la partie chauffage (6) est séparée de la partie distillation (7) au niveau de l'enveloppe (11) commune de sorte qu'aucun milieu chauffant ne puisse atteindre la partie distillation (7),
et dans lequel l'enveloppe (11) est un cylindre ou une autre forme d'enveloppe (11), dans lequel sa longueur correspond au moins à la longueur d'une conduite de distillation (9) plus la longueur d'une conduite de chauffage (8).

11. Dispositif (1) selon la revendication 10, **caractérisé en ce qu'**au moins une conduite de chauffage (8) passe dans une conduite de distillation (9).

12. Dispositif (1) selon l'une des revendications 10 ou 11, **caractérisé en ce qu'**en outre une chambre de collecte de liquide (18) de préférence chauffable, est disposée entre la partie chauffage (6) et la partie distillation (7), dont la section transversale est supérieure à la section transversale de la conduite de chauffage (6) ou de la conduite de distillation (9).

13. Dispositif (1) selon l'une des revendications 10 à 12, **caractérisé en ce que** le dispositif (1) comprend en outre un condenseur (14), dans lequel le condenseur (14) est disposé derrière l'unité de distillation (4), vu dans le sens d'écoulement (16) de la vapeur de solvant, afin de condenser la vapeur de solvant.

14. Dispositif (1) selon l'une des revendications 10 à 13, **caractérisé en ce que** le dispositif comprend en outre au moins un dispositif de classement (15) pour séparer les cristaux de suspension, dans lequel le dispositif de classement (15) est disposé derrière l'unité de distillation (4), vu dans le sens d'écoulement (17) de la suspension.

15. Dispositif (1) selon l'une des revendications 10 à 14, **caractérisé en ce que** le dispositif (1) comprend plusieurs unités de distillation (4) reliées ensemble disposées les unes derrière les autres, dans lequel la dérivation de vapeur (10) de l'unité de distillation (4) précédente forme l'alimentation de milieu chauffant (12) de l'unité de distillation (4) suivante.
